Europäisches Patentamt

European Patent Office

Office européen des brevets

(19)

(11) Publication number : **0 475 643 A1**

# EUROPEAN PATENT APPLICATION

(12)

(21) Application number : 91307953.9

(22) Date of filing : 30.08.91

(51) Int. Cl.$^5$ : **A23L 1/182**, A23L 3/10

(30) Priority : **14.09.90 US 582723**

(43) Date of publication of application :
**18.03.92 Bulletin 92/12**

(84) Designated Contracting States :
**AT BE CH DE DK ES FR GB GR IT LI LU NL SE**

(71) Applicant : **KRAFT GENERAL FOODS, INC.**
**250 North Street**
**White Plains New York 10625 (US)**

(72) Inventor : **Chordash, Richard Andrew**
**12 Berwick Court**
**Fishkill, New York 12524 (US)**
Inventor : **Kalwani, Shantu Laxmidas**
**555 South Drive**
**Tarrytown, New York 10591 (US)**
Inventor : **Fioriti, Frank Rocco**
**5 Davis Court**
**Hopewell Junction, New York 12533 (US)**

(74) Representative : **Eyles, Christopher Thomas et al**
**W.P. THOMPSON & CO. High Holborn House**
**52-54 High Holborn**
**London WC1V 6RY (GB)**

(54) **Process for retorting rice or pasta.**

(57)    Parboiled rice kernels or uncooked pasta is immersed in hot water and quenched in order to partially gelatinize and hydrate the starch granules contained in the rice or pasta. The partially-gelatinized rice or pasta is then sealed in containers. The sealed containers are then retorted with a heating profile which enables the rice or pasta to become completely gelatinized prior to the accumulation of significant $F_o$ value.

EP 0 475 643 A1

Jouve, 18, rue Saint-Denis, 75001 PARIS

## BACKGROUND OF THE INVENTION

This invention relates to the production of retorted, shelf-stable, rice or pasta-containing entrees or side dishes such as chicken with rice, chili, chop suey, spaghetti and meat sauce, macaroni and cheese and the like. More particularly this invention relates to the production of rice or pasta which can be thermally processed such as by retort sterilization without becoming mushy.

Shelf-stable products require a heat treatment step of time-temperature conditions sufficient to effect commercial sterilization. The term commercial sterilization is the degree of sterility at which all pathogenic and toxin forming organisms have been destroyed, as well as all other types of organisms which if present could grow in the product and produce spoilage under normal handling and storage conditions. As used in this invention "sterilization" is meant commercially sterile. Sterilization is conventionally done in a retort after the food product has been sealed in a container. Sterilization is harsh on food materials, particularly on starch-based ingredients, such as rice or pasta. Retort sterilization will normally disrupt starch structure which leads to a soft, mushy texture not well-regarded by consumers. Retorted, shelf-stable foods do however have advantages of convenience as they are essentially fully-cooked and have just to be reheated, such as in a microwave oven. Retorted, shelf-stable foods are also cheaper to distribute and store than frozen foods and require less time for reheating than do frozen foods.

Historically, retorted foods have only been available in metal cans. More recently, however, there have appeared microwavable, plastic bowls and trays which are sealed with flexible sheet material. These bowl and tray structures make it feasible to package single-serving portions of entrees or side dishes which may be conveniently heated in a mcirowave oven and eaten direct from the package.

As rice or pasta can constitute a significant ingredient in many prepared entrees and sidedishes, it would be extremely useful to have available a process which permits rice or pasta to be subjected to conventional retorting without undergoing undesirable textural breakdown. The process of this invention accomplishes this much desired result.

## DESCRIPTION OF THE INVENTION

Starch-based foods such as rice and pasta have, in the past, undergone excessive textural breakdown as a result of retorting. In order for foods to be sterilized in a retort they must be subjected to well-defined and calculated heat input to guarantee that all pathogenic organisms are destroyed. Normally this entails holding the food at elevated temperatures for periods of time sufficient to effect sterilization. As the food must be fully-hydrated and gelatinized in order for the heat treatment to achieve the desired kill of microorganisms, it has been conventional practice to fully-hydrate and gelatinize all of the starch-containing food materials contained in a product prior to the product being sealed in a container and retorted. By fully-hydrated is meant that all of the starch granules present throughout each rice kernel or pasta piece are hydrated. This does not mean that the rice kernel or pasta piece is incapable of absorbing additional water. As used herein the term gelatinization is meant the process wherein the starch granules in the rice or pasta have lost all birefringence and the crystalline structure in the starch granule is disrupted. In order for starch granules to become gelatinized the granules must be hydrated.

The rice preferred for use in this invention is a long-grained non-waxy, parboiled rice having a high amylopectin content, substantially no amylose content, having a moisture content of less than about 15% is the rice material for use in this invention. Preferably the rice will be of the LeBonnet, Star Bonnet, Newrex, Rexmont or Nubonnet variety.

Parboiled rice is paddy rice that has been steeped in water, briefly steamed, dried, shelled to remove the hull and then milled to remove the bran layers from the rice grains. Long grain rice, as used in the art, refers to rice kernels which are long and slender in shape and have a length which is as much as 4 to 5 times its width. The parboiled rice used in the process of this invention should have texture limits of from 200 to 300 pounds/force (90.72 to 136.08 kg-force) using FTC (Food Technology Corporation) temperature compensated Shearpress, Model TP-1A, equipped with FT-300 force transducer and a TG-4 digital texture gauge. The shear press methodology, which is generally known to those skilled in the rice art, is described below and generally corresponds to the procedure set forth in U.S. Patent No. 4,857,348 which is hereby incorporated by reference.

The texture of the rice product is measured with the shearpress by boiling 360 ml. of tap water and then adding 131.1 grams of rice, with stirring. Remove from heat, let stand for 7.5 minutes and then dump into a strainer and drain for 30 seconds. The drained rice is placed into the cell box and levelled without compression. The cell box is covered and positioned under the blade assembly. The hydraulic pump is turned on and the direction control valve is placed in the down position. The stroke time of the power ram is 2 minutes, 30 seconds. The digital texture gauge is read to determine the shear press valve in terms of pound/force (kg-force).

According to this invention the parboiled rice or pasta is only partially hydrated and not fully gelatinized prior to retorting, with full hydration and gelatinization being completed during retorting, but before the product reaches a temperature in excess of about 220°F (about 104.4°C) and preferably before accumulation of significant "$F_o$ value". At the completion of retorting the rice or pasta must have received F value of at least 6 in order to be sterilized. $F_o$ or sterilizing value, a common term in the canning industry, refers to the amount of lethal heat of a process expressed in minutes at 250°F (121.1°C) (product temperature). One minute at 250°F (121.1°C), or an equivalent amount of heat, is defined as one unit of sterilizing value.

According to a preferred embodiment of this invention, partially-hydrated rice is coated with oil before being added to the container in which it will be retorted. This oil-coating step tends to prevent kernels of rice from sticking together during the retorting operation.

In operation, the partially-hydrated and, if desired, oil-coated rice may be transported, such as being pumped through pipes, in the form of a slurry to a filling station where the slurry is dispensed into the containers which are sealed and retorted. The amount of free water in the slurry is controlled to insure sufficient water for completion of rice hydration without supplying excess liquid to the containers or to the other components. Additional food components such as meats and/or vegetables will typically be added to the container prior to sealing. These additional components may be added to the containers either before or after the rice slurry. Alternatively, the partially-hydrated rice may be simply deposited into the container, such as by means of volumetric-feeder, together with, if needed, sufficient water to enable complete hydration and gelatinization of the rice during the retort step.

Partial hydration of the rice or pasta may be accomplished by immersion in hot water, typically water having a temperature of from about 200 to 212°F (about 93.3 to 100.0°C), preferably 208 to 212°F (97.8 to 100.0°C). After this hydration the rice or pasta is quenched to a temperature of below about 90°F (about 32.2°C). Quenching may be effected by means of water soak or spray with the quench water having a temperature of below about 70°F (about 21.1°C). This partial hydration typically results in rice kernels or pasta pieces which have a hydrated outer portion and an inner or central portion which is essentially unhydrated.

Normally tap water will be used as the quenching medium. The hot water hydration and quench time is adjusted to provide for a moisture pick-up of from 40 to 120% basis the starting weight of the rice or pasta (as is weight). As will be appreciated by those skilled in the art the majority of water pick-up will occur during the hot-water hydration step with little additional moisture pick-up taking place during the quench step. Hot-water hydration times on the order of 3 to 10 minutes are typical. Quench times of about 1 to 4 minutes are typical. The preferred range of moisture pick-up for rice is about 50 to 100%, with a preferred level of about 70%. The preferred range of moisture pick-up for pasta is about 70 to 120%, with a preferred level of about 100%.

After quenching the hydrated rice or pasta is drained, such as by being passed over a screen. In the case of rice, the rice kernels are preferably coated with a small amount of oil such as soybean, cottonseed, or the like. The oil may be applied directly to the rice kernels by such means as spraying or mixing or the oil may be dispersed in the water used to form a pumpable slurry. The amount of oil which coats onto the hydrated rice will be about 0.1 to 1% basis the weight of hydrated rice. If a water-rice slurry is used the slurry will typically contain about 1.5 to 2.5 parts of the partially-gelatinized and hydrated rice per part of water.

In a specific embodiment of this invention the pumpable, oil-coated rice slurry contains from about 3 to 10% of a pregelatinized starch by weight of the water used to make the slurry and may also contain various flavoring agents such as salt and/or spices. The starch will function to thicken the aqueous slurry so that the rice kernels will remain suspended in the aqueous medium. The starch will also function to thicken any water which is not absorbed during retorting and produce a starch-thickened, sauce-like liquid. Potato starch has been found to be a preferred starch since this starch breaks down during the retort operation.

The partially-hydrated pasta may be deposited in the containers to be sealed and retorted as is, or the pasta may be combined with a sauce, such as a tomato sauce, and then deposited in the container. Pasta which has been hydrated to a level of 90% or more will usually contain sufficient moisture to enable full hydration and gelatinization throughout each pasta piece to occur in the retort and may be combined with a relatively thick tomato sauce.

The retorting step is conducted under time-temperature conditions sufficient to effect sterilization. The retorting step is also conducted in a manner such that the partially hydrated and gelatinized rice or pasta is in contact with or contains a sufficient amount of water that all of the starch granules throughout the rice kernel or pasta piece become hydrated and completely gelatinized during the "come-up" time in the retort (i.e. before accumulation of significant $F_o$ value).

This invention is further described but not limited by the following example.

EXAMPLE 1

117.6 pounds (53.34 kg) of dry, long-grained, milled, parboiled-light, LeBonnet rice having a moisture content of about 12 to 15% is blanched for five minutes by immersion in hot water having a temperature of about 210°F (about 98.9°C). The blanched rice is then quenched to below 90°F (32.2°C) by immersion for two minutes in cool tap water. The rice is then drained and found to weigh about 200 pounds (90.72 kg), approximately 1.7 times its starting weight. 91.5 parts of water were combined with 6.5 parts of pregelatinized potato starch, 1.0 parts of soybean oil and 1.0 parts of salt in a high-speed mixer and mixed for 10 to 15 minutes until all lumps were gone. Two parts of the hydrated rice were combined and mixed with one part of the aqueous mixture and the resultant slurry was pumped to a packaging line where it was flowed into single-serving plastic trays. Particles of chicken and vegetable pieces and a sauce were also added to the trays which were then sealed and retorted. The retort heating profile was 18 to 20 minutes come-up time to 250°F (121.1°C), 25 to 30 minutes at 250°F (121.1°C) and about 30 minutes of cooling with 80°F (26.7°C) water to bring the product temperature below 120°F (48.9°C). The resulting chicken and rice entree was stored at room temperature for several weeks and then unsealed and heated in a microwave oven. The texture of the rice in the microwaved product was not considered mushy and was judged to be of higher quality as compared to similar product wherein the fully gelatinized rice was added to the tray prior to sealing and retorting.

EXAMPLE 2

67.5 pounds (30.62kg) of dry pasta (i.e. spaghetti) having a moisture content of about 8 to 10% is blanched for about 6 minutes by immersion in hot water having a temperature of about 210°F (about 98.9°C). The blanched pasta is then quenched to below 90°F (32.2°C) by immersion for one minute in cool tap water. The pasta is then drained and found to weigh about 135 pounds (about 61.23kg), twice its starting weight. The partially-hydrated pasta is then mixed with a tomato sauce and deposited into single-serving trays. These trays were then sealed and retorted as in Example 1. The sealed containers were stored and then microwaved and the pasta was found to not be mushy and of improved quality compared to conventionally processed product.

**Claims**

1. A process for rice or pasta-containing, retorted food products comprising the steps of: immersing parboiled rice or uncooked pasta in hot water for a time sufficient to only partially gelatinize the starch granules; quenching the partially gelatinized rice or pasta; conveying the quenched and partially-gelatinized rice or pasta to a feeding station where the rice or pasta is deposited into containers; placing the sealed container in a retort; fully gelatinizing the rice or pasta in the retort before the accumulation of significant $F_o$ value; and thereafter, completing the retorting process.

2. A process according to claim 1, wherein the rice is a long-grained, non-waxy rice having a high amylopectin content.

3. A process according to claim 1 or claim 2, wherein the rice is selected from the varieties consisting of LeBonnet, Star Bonnet, Newrex, Rexmont and Nubonnet.

4. A process according to any one of claims 1 to 3, wherein after immersion in hot water and quenching the weight of the rice or pasta has increased weight by from 40 to 120%.

5. A process according to claim 4, wherein the food product contains rice and the weight increase of the rice is from 50 to 100%.

6. A process according to claim 5, wherein the weight increase of the rice is about 70%.

7. A process according to claim 4, wherein the food product contains pasta and the weight increase of the pasta is from 70 to 120%.

8. A process according to claim 7, wherein the weight increase of the pasta is about 100%.

9. A process according to any one of claims 1 to 6, wherein the food product contains rice and rice kernels are coated with oil after quenching.

10. A process according to any one of claims 1 to 6 or 9, wherein the food product contains rice and the quenched rice is slurried in a pregelatinized starch-containing aqueous medium prior to conveying to the feeding station.

11. A process according to claim 10, wherein the aqueous slurry contains about 3 to 10% pregelatinized starch.

12. A process according to claim 11, wherein the slurry contains about 1.5 to 2.5 parts partially gelatinized rice per part water.

European Patent
Office

**EUROPEAN SEARCH REPORT**

Application Number

EP 91 30 7953

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 502 907 (I.B.P. INDUSTRIE BUITONI PERUGINA SPA) * claims 1-5 * | 1,9 | A 23 L 1/182 A 23 L 3/10 |
| A | EP-A-0 405 018 (PANZANI PONTE LEIBIG SPA) * abstract; claims 1,2 * | 1 | |
| A | PATENT ABSTRACTS OF JAPAN vol. 9, no. 171 (C-291)(1894), 16 July 1985; & JP - A - 6043352 (HITACHI NETSUKIGU K.K.) 07.03.1985 | 1 | |
| A | PATENT ABSTRACTS OF JAPAN vol. 10, no. 28 (C-326)(2085), 4 February 1986; & JP - A - 60180553 (NIHON SEIFUN K.K.) 14.09.1985 | 1 | |
| D,A | US-A-4 857 348 (T.E. ABRAHAM et al.) * claims 1-7 * | 1 | |

TECHNICAL FIELDS
SEARCHED (Int. Cl.5)

A 23 L 1/00
A 23 L 3/00

The present search report has been drawn up for all claims

| Place of search | Date of completion of the search | Examiner |
|---|---|---|
| BERLIN | 04-12-1991 | SCHULTZE D |

EPO FORM 1503 03.82 (P0401)